Europäisches Patentamt

European Patent Office

Office européen des brevets

(11) Numéro de publication : **0 379 430 B1**

(12) **FASCICULE DE BREVET EUROPEEN**

(45) Date de publication du fascicule du brevet :
**27.05.92 Bulletin 92/22**

(51) Int. Cl.⁵ : **B62D 7/14**

(21) Numéro de dépôt : **90400133.6**

(22) Date de dépôt : **17.01.90**

(54) Dispositif de direction d'au moins un train de roues de véhicule.

(30) Priorité : **19.01.89 FR 8900622**

(43) Date de publication de la demande :
**25.07.90 Bulletin 90/30**

(45) Mention de la délivrance du brevet :
**27.05.92 Bulletin 92/22**

(84) Etats contractants désignés :
**DE GB IT**

(56) Documents cités :
**EP-A- 0 150 856**
**EP-A- 0 221 547**
**PATENT ABSTRACTS OF JAPAN, vol. 13, no. 60 (M-796)[3408], 10 février 1989, page 155 M 796; & JP-A-63 265 769 (NISSANMOTOR CO. LTD) 02-11-1988**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Galtier, Lucien**
**28 rue de Favigny**
**F-91390 Morsang Sur Orge (FR)**
Inventeur : **Barthelemy, André**
**52 route de Limours**
**F-78470 Saint Remy-Les-Chevreuse (FR)**

(74) Mandataire : **Berger, Helmut et al**
**Cabinet Z. WEINSTEIN 20, avenue de Friedland**
**F-75008 Paris (FR)**

## Description

L'invention a pour objet un dispositif de direction d'au moins un train de roues de véhicule automobile à l'aide d'au moins une première barre de direction commandée directement par le volant, ce dispositif comportant des moyens de correction de braquage induisant sur les roues des corrections de braquage en fonction d'au moins un paramètre représentatif de l'état dynamique du véhicule et mesuré par un capteur fournissant un signal électrique correspondant, et des moyens de calcul d'au moins un signal électrique de correction à partir de ce paramètre, ce signal étant appliqué audit moyen de correction de braquage.

Un dispositif de ce type est connu par la demande de brevet européen N° 0 150 856. Dans ce dispositif les corrections de braquage se font par déplacement du boîtier de la crémaillère par rapport au châssis du véhicule, par l'intermédiaire d'un vérin hydraulique. Le boîtier est supporté par le châssis au moyen de paliers en caoutchouc, c'est-à-dire en un matériau élastiquement déformable.

Ce dispositif connu présente des inconvénients considérables. En effet, le conducteur doit tenir le volant fermement pour que la correction puisse s'effectuer. Il en résulte un manque de précision en ce qui concerne les corrections, qui est encore aggravé par l'élasticité des paliers.

L'invention a pour objectif de proposer un dispositif de direction qui ne présente pas les inconvénients qui viennent d'être énoncés.

Pour atteindre ce but, le dispositif selon l'invention est caractérisé en ce que les moyens de correction comprennent une deuxième barre de direction, parallèle à la première et pouvant être entraînée par celle-ci en translation, cette deuxième barre agissant sur les roues, et des moyens pour faire varier la position relative des deux barres en fonction du signal de correction.

Dans un mode de réalisation des moyens de variation de la position relative des deux barres, ceux-ci sont constitués par des moyens hydrauliques.

Dans un autre mode de réalisation, les moyens de variation de la position relative des deux barres sont formés par des moyens électriques.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention, et dans lesquels :

La figure 1 est une vue en coupe longitudinale et schématique du dispositif de direction selon l'invention ;

La figure 2 est une vue en coupe le long de la ligne II-II de la figure 1 ;

La figure 3 est une vue à plus grande échelle de la partie indiquée en III de la figure 1 ;

La figure 4 est une vue similaire à celle de la figure 3 et illustre le dispositif dans trois positions différentes ;

La figure 5 est une vue en coupe axiale avec arrachement d'un deuxième mode de réalisation de l'invention ; et

La figure 6 est une vue en coupe le long de la ligne VI-VI de la figure 5.

Le dispositif de direction selon l'invention comprend, à l'intérieur d'un boîtier 1, fixé rigidement et transversalement entre les roues avant sur la caisse ou le berceau d'essieu avant, une barre de liaison 2 axialement mobile en translation suivant l'axe X-X et actionnant à chacune de ses extrémités une bielle 3 de commande de braquage des roues avant, un pignon 4 actionné en rotation par le volant de direction 5, une crémaillère 6 dont l'axe Z-Z est parallèle à l'axe X-X et qui est axialement entraînée par le pignon 4, et un ensemble vérin d'assistance 7 qui est intégré dans le boîtier et présente une structure connue en soi.

Cet ensemble comprend un cylindre 8 qui est lié rigidement au boîtier 1 par des paliers 9 et 10 et les écrous 11. Le cylindre 8 guide un ensemble piston 12, 13 solidaire d'un élément tubulaire 14 coaxial au cylindre 8. L'élément 14 est rendu solidaire par un élément 15 d'une tige 16 qui est axialement alignée avec la crémaillère 6 et reliée rigidement à l'extrémité de celle-ci. Grâce à cette configuration le boîtier guide les déplacements de la crémaillère 6 à l'aide d'un poussoir 17 et des paliers 9, 10 du vérin d'assistance. Il guide aussi le déplacement de la barre de liaison 2 par l'intermédiaire des paliers 21. L'ensemble vérin d'assistance 7 comporte en outre un élément tubulaire 18 coaxial au cylindre 8 et à l'élément tubulaire 14, sur la surface externe cylindrique duquel se déplace l'ensemble piston 12, 13.

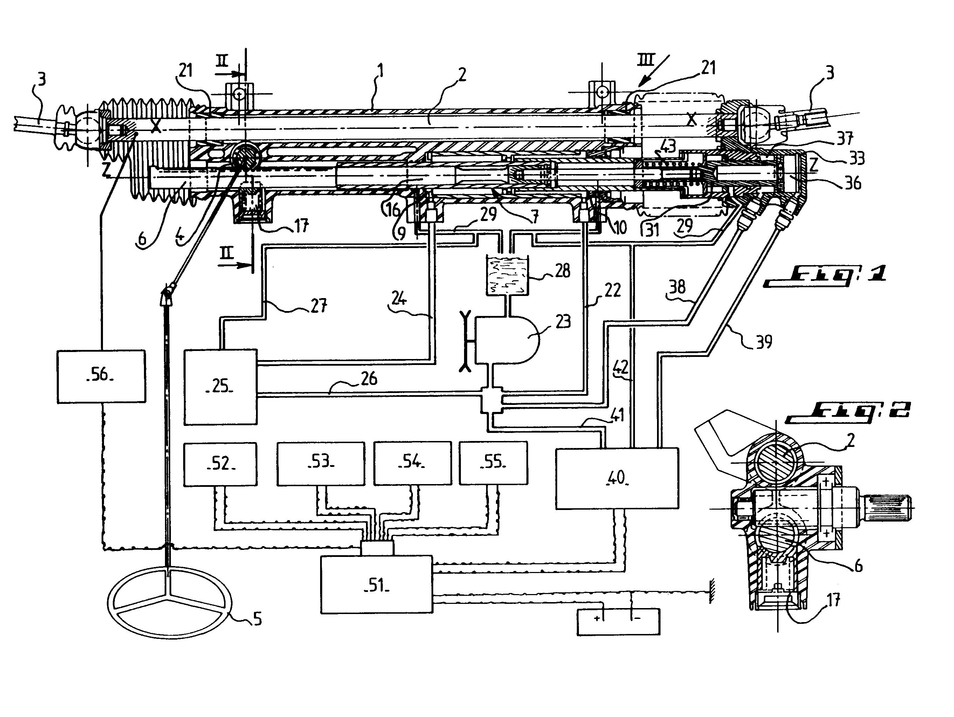

L'ensemble piston 12, 13 délimite deux chambres dont les volumes sont variables par son déplacement, à savoir une première chambre 19 délimitée entre le cylindre 8 et l'élément tubulaire 14 et une deuxième chambre 20 délimitée entre le cylindre 8 et l'élément tubulaire 18. Comme il ressort de la figure, la surface du piston dans la chambre 19 est plus faible, avantageusement la moitié de celle de la deuxième chambre. Comme le montre la figure 1, la première chambre 19 est constamment alimentée en fluide sous pression par une conduite haute pression 22 reliée à une centrale de pression 23 contenant du fluide sous pression. La deuxième chambre 20 est reliée par une conduite 24 à un régulateur hydraulique 25 qui est adapté pour relier alternativement la conduite 24 à une conduite 26 haute pression en provenance de la centrale de pression 23 et une conduite de retour 27 au réservoir de fluide 28. En 29 on a indiqué des conduites de retour de fuite.

En bout de l'ensemble vérin d'assistance 7, et relié rigidement à celui-ci, plus précisément à la tige 16, se trouve un piston 31 muni d'un joint 32. Sa forme est telle qu'il sert d'écrou de serrage pour l'ensemble vérin d'assistance. Sur le piston 31 peut coulisser axialement suivant Z-Z, indépendamment du sens de déplacement de la crémaillère 6, un cylindre 33 dont le corps est relié rigidement à la barre de liaison 2 qui commande le pivotement des roues avant. Ce cylindre 33, fermé par un écrou 34 formant palier, constitue de part et d'autre du piston 31 deux chambres différentielles de pression 36, 37. La chambre 37 est reliée constamment par une conduite 38 à la centrale de pression 23 et constitue ainsi une chambre haute pression. La chambre 36 est reliée par une conduite 39 alternativement par l'intermédiaire d'un régulateur hydraulique 40 à une conduite haute pression 41 communiquant avec la centrale de pression 23 et une conduite 42 de retour au réservoir 28. La pression à l'intérieur de la chambre 36 est donc régulée. On constate en outre la présence d'une conduite de retour de fuite 29.

Le système vérin formé par le piston 31 et le cylindre 33 est équipé d'un système de mise en position moyenne du piston 31 par rapport au cylindre 33. Ce système a pour fonction, dans un but de sécurité, d'être suffisant pour maintenir les positions relatives du piston 31 et du cylindre 33 en cas de défaillance de la pression hydraulique.

Ce système de positionnement moyen est réalisé à l'aide d'un ressort de compression 43 précontraint, disposé coaxialement autour de l'axe du piston 31. Ce ressort prend appui par ses extrémités, d'une part, sur une rondelle 44 plaquée simultanément, en position moyenne du piston, sur un épaulement 45 du piston et sur un épaulement interne 46 de l'écrou 34 et, d'autre part, sur une bague épaulée 47 qui présente à cette fin une forme oblongue et prend appui, d'une part, sur l'élément de liaison 15 de l'élément tubulaire 14 et de la tige 16, et, d'autre part, en 49 sur l'écrou 34.

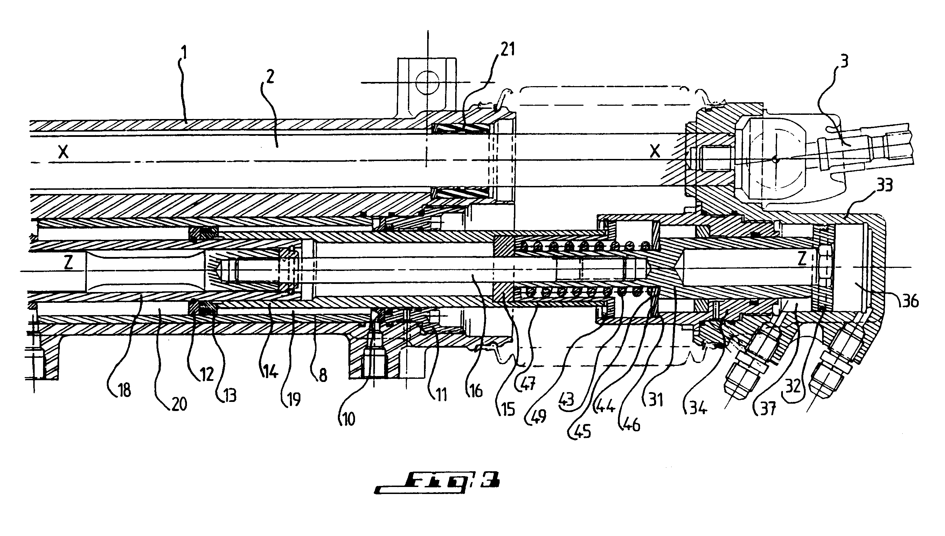

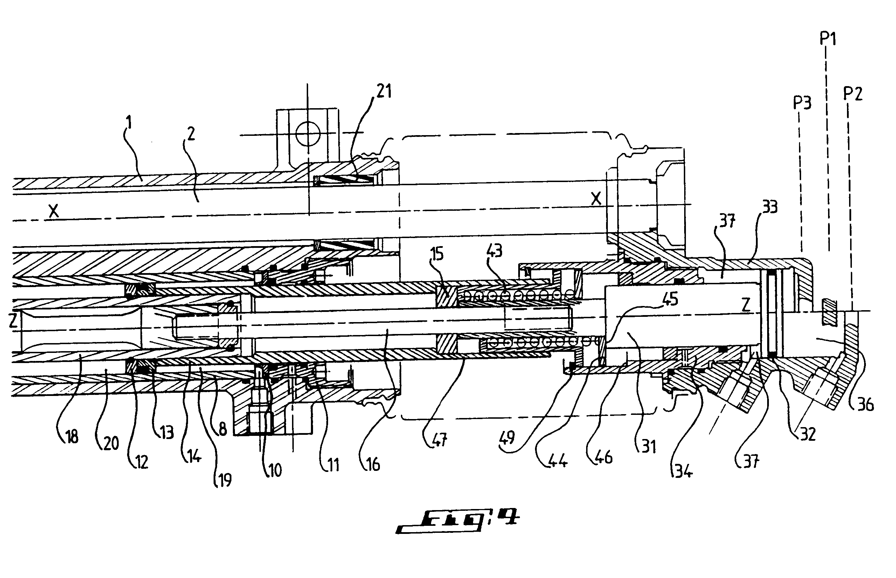

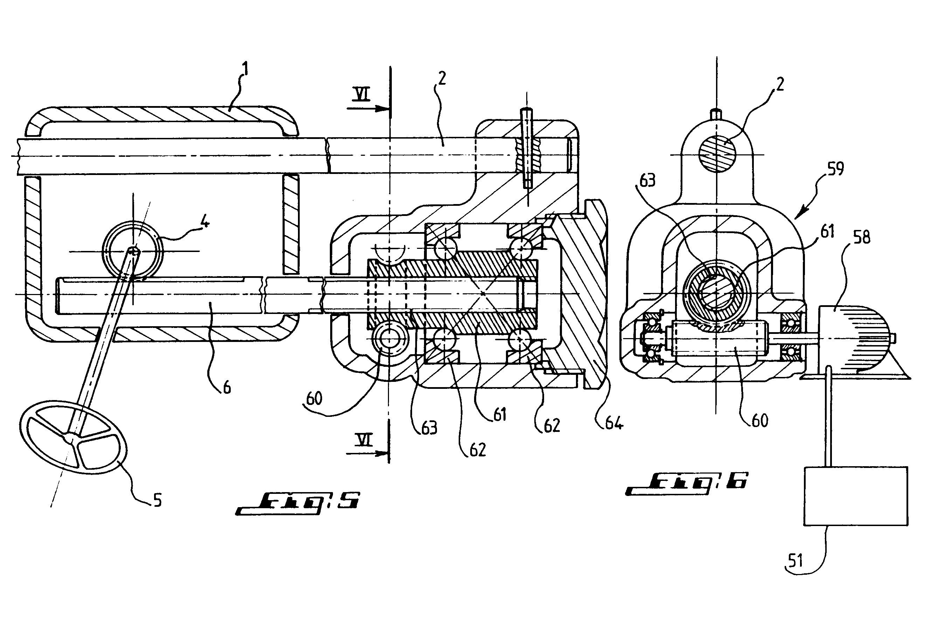

Dans ces circonstances, pour qu'il y ait mouvement axial du cylindre 33 par rapport au piston 31, il faut que les pressions hydrauliques agissant sur ces deux éléments dans les chambres 36 et 37 exercent un effort axial supérieur au seuil de tarage du ressort 43 qui maintient une position relative moyenne entre la crémaillère 6 qui fait corps avec le piston 31 et le cylindre 33 qui fait corps avec la barre de liaison 2 commandant les roues avant. La figure 4 illustre le dispositif dans sa position normale moyenne P1 de braquage et des positions contrôlées respectivement positive P2 et négative P3.

Le régulateur hydraulique 40 est commandé par un calculateur électronique 51 qui calcule les ordres qu'il donne au régulateur 40 à partir de paramètres représentatifs de l'état dynamique du véhicule. Ces paramètres sont mesurés par des capteurs qui transmettent un signal électrique approprié au calculateur 51. Ainsi on a indiqué schématiquement sur la figure 1 en 52 à 55 des capteurs destinés à fournir des paramètres relatifs aux angles du volant, à la vitesse du véhicule, à des accélérations latérales et à des vitesses de lacet ainsi qu'à l'angle moyen des roues.

Concernant l'ensemble vérin d'assistance 7, il est de préférence du type commercialisé sous le nom DIRAVI mais peut bien entendu être de tout autre type connu de direction assistée ou même une direction non assistée, à condition que ce soit une direction à asservissement de position. En ce qui concerne le régulateur hydraulique 40, il peut être de tout type connu, par exemple un tiroir hydraulique.

Le fonctionnement du dispositif représenté dans son ensemble à la figure 1 ressort déjà clairement de la description de la structure, qui vient d'être faite. Le dispositif comprend d'abord la commande conventionnelle comportant le volant 5, le pignon 4, la crémaillère 6 assistée en effort par le système hydraulique formé par l'ensemble vérin d'assistance 7, afin d'avoir en toute position des déplacements de la crémaillère 6 un asservissement des roues en position, neutralisant tout déplacement axial créé par des efforts autres que ceux commandés par le volant. Ceci permet de préserver l'efficacité et la précision de la deuxième commande qui prend en compte les divers paramètres de la situation dynamique du véhicule par l'intermédiaire du calculateur électronique 51 destiné à agir sur le régulateur 40 qui commande le déplacement, si nécessaire, dans un sens ou dans l'autre par rapport à la position normale moyenne, du système formé par le piston 31 et le cylindre 33, afin de corriger à l'insu du conducteur la position directionnelle des roues avant d'une façon instantanée. En position moyenne, les forces exercées par le fluide sous haute pression dans la chambre 37 et la pression régulée dans la chambre 36 s'annulent car les deux faces du piston n'ont pas la même surface. Il n'y a déplacement relatif du cylindre 33 et du piston 31 et donc correction de braquage que si l'on fait varier la pression régulée dans la chambre 36 par l'intermédiaire du régulateur hydraulique 40, par le calculateur électronique 51. Les paramètres qui déterminent la correction tels que l'angle du volant, la vitesse du véhicule, l'accélération latérale et la vitesse de lacet par exemple, n'étant pas liés à celle-ci, il est nécessaire de connaître l'angle de braquage des roues pour que le calculateur donne l'ordre d'arrêter de corriger (retour du régulateur hydraulique à la position d'équilibre). Ceci explique la détection de l'angle moyen des roues à l'aide du capteur 56.

Les figures 5 et 6 montrent un autre mode de réalisation du sytème de correction en fonction des divers paramètres de la situation dynamique du véhicule, par l'intermédiaire du calculateur électronique 51.

Ce mode de réalisation utilise un moteur électrique 58 à deux sens de rotation qui est monté sur un dispositif chariot 59 solidaire de la barre de direction 2. Le moteur entraîne, par l'intermédiaire d'une vis sans fin 60, un écrou 61 qui est monté rotatif dans le chariot 59 à l'aide de paliers 62 et engrène par sa partie filetée en 63 un filetage de la crémaillère 6. Un écrou 64 est prévu pour bloquer axialement les paliers 62.

On comprend aisément que le moteur électrique 58, en faisant tourner la vis sans fin 60 et l'écrou 61, provoque le déplacement axial du chariot 59 et ainsi de la barre de braquage 2. Le moteur est commandé par le calculateur électronique 51.

## Revendications

1. Dispositif de direction d'au moins un train de roues d'un véhicule automobile à l'aide d'au moins une première barre de direction (6,16) commandée directement par le volant (5), ce dispositif comportant des moyens de correction de braquage induisant sur les roues des corrections de braquage en fonction d'au moins un paramètre représentatif de l'état dynamique du véhicule et mesuré par un capteur fournissant un signal électrique correspondant, et des moyens de calcul d'au moins un signal électrique de correction à partir de ce paramètre, ce signal étant appliqué auxdits moyens de correction de braquage, caractérisé en ce que ces derniers comprennent :
une deuxième barre de direction (2), parallèle à la première (6, 16) et pouvant être entraînée par celle-ci en translation, cette deuxième barre (2) agissant sur les roues, et
des moyens (31, 33 ; 58) pour faire varier la position relative des deux barres (2 ; 6, 16) en fonction du signal de correction.

2. Dispositif selon la revendication 1, caractérisé en ce qu'il comprend des moyens de détection (56) de l'angle de braquage des roues reliés aux moyens de calcul (51), ceux-ci étant programmés pour arrêter le déplacement relatif des deux barres (2, 6) lorsque l'angle de braquage désiré est atteint.

3. Dispositif selon la revendication 1 ou 2, caractérisé en ce que les moyens pour faire varier la position relative des deux barres sont des moyens hydrauliques (31, 33).

4. Dispositif selon la revendication 3, caractérisé en ce que les moyens (31, 33) pour faire varier la position relative des deux barres (2, 6) comprennent un vérin dont le corps (33) est solidaire de la deuxième barre (2) et dont le piston (31) est monté à une extrémité de la première barre (6, 16), les deux chambres (36, 37) du vérin étant en communication avec un régulateur hydraulique (40) commandé par lesdits moyens de calcul (51).

5. Dispositif selon la revendication 4, caractérisé en ce que les moyens (31, 33) pour faire varier la position relative des deux barres (2, 6) comprennent en outre un système (43, 44, 47) de mise en position moyenne du piston (31) par rapport au corps (33) du vérin.

6. Dispositif selon la revendication 5, caractérisé en ce que le système de mise en position moyenne comprend un ressort (43) entourant la première barre (16) et dont chaque extrémité agit sur une pièce mobile (44, 47) qui, en position moyenne, est en appui simultanément sur le corps du vérin (33) et sur la première barre (16).

7. Dispositif selon la revendication 1 ou 2, caractérisé en ce que les moyens pour faire varier la position relative des deux barres (2 ; 6, 16) sont des moyens électriques (58).

8. Dispositif selon la revendication 7, caractérisé en ce que les moyens pour faire varier la position relative des deux barres (2 ; 6, 16) comprennent un moteur électrique (58) commandé par les moyens de calcul (51), ce moteur pouvant entraîner en rotation un écrou (61) apte à se déplacer le long de la première barre (16), cet écrou (61) étant solidaire en translation de la deuxième barre (2).

9. Dispositif selon l'une des revendications précédentes, caractérisé en ce que le paramètre représentatif de l'état dynamique du véhicule appartient au groupe constitué par l'angle du volant, la vitesse du véhicule, l'accélération latérale et la vitesse de lacet.

10. Dispositif selon l'une des revendications précédentes, caractérisé en ce qu'il comprend un ensemble (7) de direction assistée à asservissement de position.

11. Dispositif selon la revendication 10, caractérisé en ce que la première barre (6, 16) est mobile dans un boîtier (1) dont une partie constitue le vérin d'assistance (7) formant la direction assistée à asservissement de position précitée, le piston (12, 13) de ce vérin faisant partie intégrante de la première barre (6, 16).

## Patentansprüche

1. Vorrichtung zum Lenken von wenigstens einem Radsatz eines Kraftfahrzeugs mit Hilfe von wenigstens einer ersten unmittelbar durch das Lenkrad (5) gesteuerten Lenkstange (6,16), wobei diese Vorrichtung Mittel zur Berichtigung des Lenkungsausschlags aufweist, welche an den Rädern Lenkungsausschlagberichtigungen in Abhängigkeit von wenigstens einem den dynamischen Zustand des fahrzeugs darstellenden und durch einen ein entsprechendes elektrisches Signal abgebenden Meßwertgeber gemessenen Parameter veranlassen, sowie Mittel zur Berechnung von wenigstens einem von diesem Parameter abgeleiteten elektrischen Berechnungssignal, wobei dieses Signal an die besagten Lenkungsausschlagberichtigungsmittel angelegt wird, dadurch gekennzeichnet, dass diese letzteren umfassen:

eine zweite Lenkstange (2), die mit der ersten (6,16) parallel ist und durch diese in Parallelverschiebung mitgenommen werden kann, wobei diese zweite Stange (2) auf die Räder einwirkt und

Mittel (31,33;58), um die relative Stellung der beiden Stangen (2;6;16) in Abhängigkeit des Berichtigungssignals zu verändern.

2. Vorrichtung nach Anspruch 1, dadurch gekennzeichnet, dass sie Mittel (56) zur Ermittlung des Lenkungsausschlagswinkel der Räder aufweist, die mit den Rechnungsmitteln (51) verbunden sind, wobei diese letzteren programmiert sind, um die relative Verschiebung der beiden Stangen (2,6) anzuhalten, wenn der gewünschte Lenkungsauschlagwinkel erreicht wird.

3. Vorrichtung nach Anspruch 1 oder 2, dadurch gekennzeichnet, dass die Mittel, um die relative Stellung der beiden Stangen zu verändern, hydraulische Mittel (31,33) sind.

4. Vorrichtung nach Anspruch 3, dadurch gekennzeichnet, dass die Mittel (31,33), um die relative Stellung der beiden Stangen (2,6) zu verändern, einen Kraftzylinder aufweisen, dessen Körper (33) mit der zweiten Stange (2) fest verbunden ist und dessen Kolben (31) an einem Ende der ersten Stange (6,16) angeordnet ist, wobei die beiden Kammern (36,37) des Kraftzylinders mit einem durch die besagten Berechnungsmittel (51) gesteuerten hydraulischen Regler (40) in Verbindung sind.

5. Vorrichtung nach Anspruch 4, dadurch gekennzeichnet, dass die Mittel (31,33), um die relative Stellung der beiden Stangen (2,6) zu verändern, ausserdem ein System (43,44,47) umfassen, um den Kolben (31) in eine mittlere Stellung in Bezug auf den Körper (33) des Kraftzylinders zu bringen.

6. Vorrichtung nach Anspruch 5, dadurch gekennzeichnet, dass das System zum Bringen in die mittlere Stellung eine die erste Stange (16) umgebende Feder (43) aufweist, deren jedes Ende auf ein bewegliches Stück (44,47) einwirkt, welches, in der mittleren Stellung, sich gleichzeitig an dem Körper des Kraftzylinders (33) und an der ersten Stange (16) abstützt.

7. Vorrichtung nach Anspruch 1 oder 2, dadurch gekennzeichnet, dass die Mittel, um die relative Stellung der beiden Stangen (2;6;16) zu verändern, elektrische Mittel (58) sind.

8. Vorrichtung nach Anspruch 7, dadurch gekennzeichnet, dass die Mittel, um die relative Stellung der beiden Stangen (2;6;16) zu verändern, einen durch die Berechnungsmittel (51) gesteuerten elektrischen Motor (58) aufweisen, wobei dieser Motor eine Mutter (61) in Drehbewegung antreiben kann, welche fähig ist, sich entlang der ersten Stange (16) zu verschieben, wobei diese Mutter (61) mit der zweiten Stange (2) in Parallelverschiebung gebunden ist.

9. Vorrichtung nach einem der vorangehenden Ansprüche, dadurch gekennzeichnet, dass der den dynamischen Zustand des fahrzeugs darstellende Parameter zu der aus dem Winkel des Lenkrades, der Geschwindigkeit des fahrzeugs, der Seitenbeschleunigung und der Schlingerbewegungsgeschwindigkeit bestehenden Gruppe gehört.

10. Vorrichtung nach einem der vorangehenden Ansprüche, dadurch gekennzeichnet, dass sie eine Servolenkungseinheit (7) mit Stellungsnachlaufsteuerung aufweist.

11. Vorrichtung nach Anspruch 10, dadurch gekennzeichnet, dass die erste Stange (6,16) in einem Gehäuse (1) bewegbar ist, dessen eine Teil den die vorgennante Servolenkung mit Stellungsnachlaufsteuerung bildenden Servokraftzylinder (7) bildet, wobei der Kolben (12,13) dieses Kraftzylinders einen einstückig mit der ersten Stange (6,16) zusammenhängenden Bestandteil dieser letzteren bildet.

## Claims

1. Device for steering at least one set of wheels of an automotive vehicle with the assistance of at least one steering rod (6,16) controlled directly by the steering wheel (5), this device comprising lock correcting means inducing upon the wheels lock corrections as a function of at least one parameter representative of the dynamic state of the vehicle and measured by a sensor supplying a corresponding electric signal and means for computing at least one electric correction signal from this parameter, this signal being applied to the said lock correction means, characterized in that the latter comprise:

a second steering rod (2) parallel with the first one (6,16) and which may be driven by the latter in translatory motion, this second rod (2) acting upon the wheels and

means (31,33;58) for carying the relative position of both rods (2;6,16) as a function of the correction signal.

2. Device according to claim 1, characterized in that it comprises means (56) for detecting the lock angle of the wheels connected to the computing means (51), the latter being programmed to stop the relative displacement of both rods (2,6) when the desired lock angle is reached.

3. Device according to claim 1 or 2, characterized in that the means for varying the relative position of both rods are hydraulic means (31,33).

4. Device according to claim 3, characterized in that the means (31,33) for varying the relative position of both rods (2,6) comprise a jack the body (33) of which is made fast to the second rod (2) and the piston (31) of which is mounted at one end of the first rod (6,16), both chambers (36,37) of the jack being in communication with a hydraulic regulator (40) operated by the said computing means (51).

5. Device according to claim 4, characterized in that the means (31,33) for varying the relative position of both rods (2,6) moreover comprise a system (43,44,47) for putting the piston (31) in a middle position with respect to the body (33) of the jack.

6. Device according to claim 5, characterized in that the system for putting in the middle position comprises a spring (43) surrounding the first rod (16) and each end of which acts upon a movable part (44,47) which in the middle position is bearing simultaneously upon the body of the jack (33) and upon the first rod (16).

7. Device according to claim 1 or 2, characterized in that the means for varying the relative position of both rods (2;6,16) are electric means (58).

8. Device according to claim 7, characterized in that the means for varying the relative position of both rods (2;6,16) comprise an electric motor (58) controlled by the computing means (51) and this motor may rotate a nut (61) adapted to displace itself along the first rod (16), this nut (61) being bound in translatory motion to the second rod (2).

9. Device according to one of the foregoing claims, characterized in that the parameter representative of the dynamic state of the vehicle belongs to the group consisting of the angle of the steering wheel, the speed of the vehicle, the lateral acceleration and the yaw speed.

10. Device according to one of the foregoing claims, characterized in that it comprises a steering assembly (7) power-assisted in position follow-up relationship.

11. Device according to claim 10, characterized in that the first rod (6,16) is movable in a casing (1) one portion of which constitutes the assisting jack (7) forming the aforesaid direction means power-assisted in position follow-up relationship, the piston (12,13) of this jack forming an integral part of the first rod (6,16).

Fig.1

Fig.2

Fig. 4

EP 0 379 430 B1

FIG. 6

FIG. 5